# EUROPEAN PATENT APPLICATION

(11) **EP 0 780 205 A2**
(43) Date of publication of application: **25.06.1997**
(21) Application number: 96118641.8
(22) Date of filing: 20.11.1996
(51) Int. Cl.: B29B 9/06

(54) **Paper pellets and method for manufacturing the same**

(30) Priority: 20.12.1995 JP 349719/95
(71) Applicant: INDUSTRIAL TECHNICAL R&D LABORATORY INC., Takarazuka-shi, Hyogo (JP)
(72) Inventor: Nakamura, Kenichi, Takarazuka-shi, Hyogo (JP)
(74) Representative: Glawe, Delfs, Moll & Partner

(57) **Abstract**

Paper pellets and a method for manufacturing the same, in which dried, pulverized paper is mixed with a crosslinking agent under heating so that the pulverized paper is surface treated by means of an impregnation coating with the crosslinking agent; the surface treated pulverized paper, a thermoplastic synthetic resin and a lubricant are kneaded together under heating and compression to produce a paste material; and the paste material is pelleted and cooled.

## Description

The invention relates to the paper pellets and the method for manufacturing the same. The paper pellets are manufactured by utilizing the waste and trash paper and are moldable by means of the injection molding, extrusion, vacuum forming and air-compression molding just as the conventional thermoplastic synthetic resins.

### [Prior Art]

The paper is not melt and has no fluidity even if it is pulverized, and therefore it is impossible to use the paper (waste paper) as a molding material for injection molding, even if it is granulated or pelleted. A conventional molding method is known, in which waste paper and synthetic resin material are combined, the paper and synthetic resin material are pulverized, mixed, put into a mold and press-molded under heating and compression. As an another molding method utilizing the waste paper the water immersion pulp molding method is known, in which the waste paper is immersed into the water and is pulped by a pulper, a mold having a wire net is dipped, the molten pulp is adhered to the wire net provided on the surface of the mold by applying suction force from the rear surface of the mold, the wire net is pulled out of the water and is reversed, and consequently the adhered pulp is heated and dried.

In the conventional molding method, which press-molds the mixture of the waste paper and synthetic resin, it is impossible to freely mold into complex shapes, and further there is disadvantage that the mechanical strength of the moldings by this method is low. In the water immersion pulp molding method, there are disadvantage;
(1) it requires an enormous amount of the equipment cost for a drainage disposal system since it employs a large amount of water; and
(2) it requires a large amount of energy, large and long conveyors for drying purpose, the construction cost for a factory is emormous, the production efficiency is low, and the cost of manufactured goods is high.

At present, all of the waste and trash paper are incinerated in garbage furnace together with damp or half-dried trash and garbage. The waste paper floods the cities and streets, and the price for waste paper is approaching zero or even disposal cost for waste paper has to be paid nowadays. One of the most important current issues in relation to the environmental pollution is to effectively utilize the waste and trash paper.

### SUMMARY OF THE INVENTION

This invention is to effectively utilize the waste or trash paper, which is normally discarded in cities and is consequently incinerated. Accordingly, it is an object of the invention to provide paper pellets made from paper material or waste paper, which can be molded by injection molding just as a thermoplastic synthetic resin, and to provide a method for manufacturing the paper pellets. It is still another object of the invention to provide pellets, which can be reuse after recycling the moldings molded with the paper pellets, and which do not give off toxic or harmful fumes and gases when incinerated or do not generate high thermal energy which damages the roaster of the incinerator.

In the first place, the paper has no fluidity or pourability even when it is pulverized. Accordingly, in order to give the fluidity or pourability the dried pulverized paper is mixed or kneaded with a crosslinking agent under heating so that the surfaces of the pulverized paper are surface treated by means of the impregnation coating while the crosslinking agent is fused with the heating. In the second place, the surface treated pulverized paper is kneaded under heating and compression with a binder such as a thermoplastic synthetic resin and with a lubricant to give the good lubricity so that the paste material is obtained. The mixture or paste material is extruded from the extruder as a parison having a small diameter. The parison is cut into granules and the granules are cooled to produce the pellets.

According to the invention, the waste or trash paper normally disposed in incinerators can be supplied as paper pellets, which is moldable into a product having a random, complex shape by means of injection molding or extrusion. Accordingly, the molding made of paper by the invention is utilizable in place of the conventional synthetic resin made molding, which offers a solution of the waste or trash paper problem. The disposal cost for synthetic resin made products is no longer necessary and the pollution problem caused by the disposal of the synthetic resin made products can be solved. The molding made of the paper pellets of the invention is recycled after use, pulverized and pelleted again, thereby making effective use of the natural resources by reclamation.

In the water immersion pulp molding method, which is a conventional waste paper reclamation method, the product price is costly since it requires an enormous amount of the equipment cost for the drainage disposal system and it employs a large amount of water. It is also probable that the method generates the filthy water problem. In the invention, however, the filthy water problem will not occur since the water is not employed in the production processes, and the products are supplied reasonably and the moldings manufactured by the invention attain excellent mechanical properties and strength.

It is preferable that the dried pulverized paper is less than a 1 mm mesh pass and the pellets contain the pulverized paper greater than 50% by weight. The thermoplastic resin as a binder may be polyolefine such as polyethylene and polypropylene, and the crosslinking agent may be, for example, atactic polypropylene or maleic anhydride polypropylene.

According to these conditions the moldings will not give off toxic fumes when finally disposed in the incinerator and the thermal energy during the incineration of the moldings by the invention is approximately same with that of coal and much less than that of synthetic resin. Therefore, the damage to the incinerator, the old problem, does not occur, which provide an effective solution to pollution issue.

With the further progress of the invention, packing materials and building materials may be formed by the invention in place of conventional wooden materials. The products by the invention are corrosion-resistant and are not attacked by termites, thereby reducing the volume of hewing down the forest and making effective use of the natural resources. With the effective use of the trash paper the amount of the trash paper to be disposed in incinerators is reduced, which in turn reduces the generation of carbon dioxide and helps in preventing the climatic disorder due to the temperature rise of the earth's atmosphere.

### BRIEF DESCRIPTION OF THE DRAWINGS

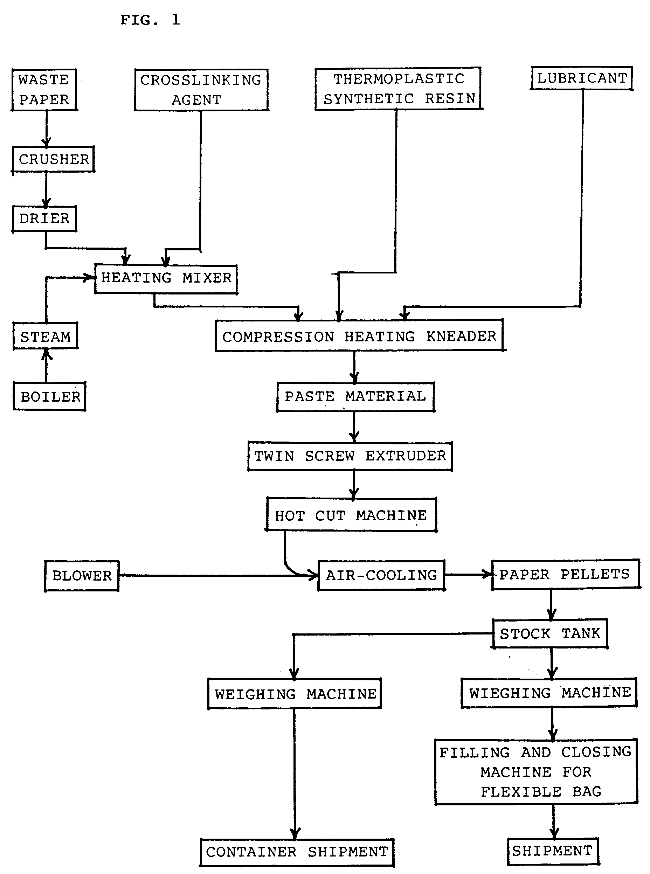

Figure 1 is a schematic diagram showing the manufacturing processes of the embodiment for the paper pellets of the invention.

### DETAILED DESCRIPTION OF THE PREFERRED EMBODIMENT

As described above the paper is not melt or pourable and has no fluidity even if it is pulverized. The surfaces of the pulverized paper must be impregnation coated with a thermoplastic resin under heating in order to achieve the fluidity. Accordingly, in the present invention, the surfaces of the pulverized paper are surface treated by means of impregnation coating with a crosslinking agent such as atactic polypropylene (in case that the binder is polyethylene) or maleic anhydrid polypropylene (in case that the binder is polypropylene) so that the pulverized paper achieves fluidity. In addition, it is preferable to add stearin to provide good lubricity.

Injection molding is not possible even if the surfaces of the pulverized paper are surface treated by means of impregnation coating with the crosslinking agent.

Therefore, the pulverized paper is further kneaded under heating and compression with the thermoplastic resin and the lubricant so that the thermoplastic resin is melted and fused with the surface treated pulverized paper and the mixture becomes a paste material. The mixture or the paste material is put into a twin screw extruder and is hot cut at the exit of the extruder to produce paper pellets.

The shape or dimension of the paper pellet manufactued by the processes described above is similar to that of the ordinary thermoplastic synthetic resin pellets (for example, 3 mm in diameter and 3 mm long). Even when the paper pellets contain the paper content greater than 50% by weight, the paper pellets have thermoplasticity and fluidity and it is possible to mold into a random shape by means of a molding unit such as an injection unit. The sheet molded by the extrusion is subsequently moldable by the vacuum forming machine or air-pressure forming machine. If the paper is pulverized to less than 1 mm mesh pass in order to achieve the better fluidity, the film with 0.6-1.0 mm thickness may be formed.

It is preferable that the paper pellets do not comprise the ingredients which give off black smokes and toxic fumes, for example, such as the chlorine gas or cyanogen during the manufacturing processes and when incinerated. Since the paper pellet comprises four ingredients including the paper, for example, polyethylene or polypropylene as a thermoplastic synthetic resin, atactic polypropylene or maleic anhydrid polypropylene as a crosslinking agent and stearin as a lubricant, the paper pellets do not give off toxic fumes when incinerated. In this manner, the heat damage to the roaster of the incinerator due to the toxic fumes and the emvironmental problems by the generation of the toxic fumes are avoidable.

One of the biggest problems when incinerating the synthetic resin is that the large amount of thermal energy is generated when incinerated, which may cause the heat damage to the roaster of the incinerator. The main ingredients of the paper pellets in the invention are the paper material and synthetic resins. If the paper pellets contain paper ingredient at least 51% by weight and the remains are polyolefine the thermal energy of the pellets is 7,000 to 8,000 kcal/kg with the estimation that the thermal energy of the waste paper is 3,000 to 4,000 kcal/kg. Since the thermal energy of the pellets is approximately equivalent to that of coal the incinerator will not be damaged by heating.

The binder for producing the pellets in the invention is mainly polyolefine such as polyethylene (PE) and polypropylene (PP). Since the polyolefine is a resin material, which is not apt to deteriorate, the deterioration in the mechanical strength is not detected even when the thermal history (recyclings) of the paper pellets is 10 cycles. Therefore, the pellets have stable physical properties, which fall within the tolerance, and the paper pellets are reusable by recycling the moldings of the paper pellets after usage, pulverizing them and pelleting with the heating extrusion.

The embodiments of the present invention are disclosed hereinafter; however, the scope of the invention is not restrictive to the embodiments.

In the first embodiment, the main ingredient is the pulverized waste paper, the binder is polyethylene, the crosslinking agent is atactic polypropylene (A.P.P.) and the lubricant is stearin. The ratios of the composition are as follows:

| | | |
|---|---|---|
| 1 mm mesh pass pulverized waste paper (main ingredient) | 55.00% | 220kg |
| 10mm mesh pass pulverized polyethylene film (binder) | 41.75% | 117kg |
| atactic polypropylene (crosslinking agent) | 2.75% | 11kg |
| stearin (lubricant) | 0.50% | 2kg |
| Total | 100.00% | 400kg |

The waste newsprint paper is employed as a main ingredient, which is pulverized to 1 mm mesh pass. The low density polyethylene (LDPE) scrap films are pulverized to 10 mm mesh pass and are used as a binder. The atactic polypropylene (A.P.P.) as a crosslinking agent and stearin as a lubricant are utilized. In the first place, the pulverized paper (1 mm mesh pass) is dried by heating and the moisture content is removed (tissue moisture remains). The dried pulverized paper 220 kg and atactic polypropylene crosslinking agent (A.P.P.) 11 kg are put into the 500 liter heating mixer and are heated to 180 Celcius degrees by introducing the steam into the jacket of the mixer. The A.P.P. crosslinking agent is gradually melted and is impregnated into the pulverized paper from the surfaces thereof. In 10 minutes, the A.P.P. is completely fused, the pulverized paper is impregnation coated and the surface treatment of the pulverized paper is completed. The A.P.P. impregnates into the paper tissue, and therefore the paper and A.P.P. are combined together physically strongly.

The pulverized paper 231 kg which is surface treated with the A.P.P., polyethylene(PE) scrap film 117 kg which is pulverized to 10 mm mesh pass, and stearin 2 kg are put into the 500 liter mixing kneader and are heated to 170-180 Celcius degrees by introducing the steam into the jacket of the mixing kneader while kneading them for 10 minutes. Then, the material is all mixed and fused together to form a paste material. The paste material is forcefully put into the hopper of the twin screw extuder. The parison having a diameter of 3 mm is extuded from the end of the extruder, is hot cut into the pieces of 3 mm long by the hot cut machine and is forwarded into the pellet tank while being air cooled to form the paper pellets, which are stored in the stock tank.

In this manner, one batch of the paper pellets 400 kg is processed in 20 minutes and the paper pellets 1,200 kg are manufactured per hour. Table 1 below shows the mechanical strengths and properties of the paper pellets.

**TABLE 1**

| Comparison for physical properties between embodiments and some resins | | | | | | | |
|---|---|---|---|---|---|---|---|
| | E1 | E2 | LDPE | HDPE | PPHP | PPBP | ABS |
| S. G. | 1.10 | 1.10 | 0.92 | 0.96 | 0.91 | 0.91 | 1.03 |
| Tensile Y. S. (kg/cm²) | | | 89 | 260 | 380 | 270 | 440 |
| F. S. (kg/cm²) | 184 | 206 | 150 | 200 | 250 | 200 | 350 |
| F. E. (%) | 6.5 | 3.8 | 600 | >500 | 500 | 500 | 20 |
| B. S. (kg/cm²) | 260 | | | | | | 700 |
| M.F.E. (kg/cm²) | 10200 | 18700 | 3000 | 11000 | 16500 | 12000 | 23000 |
| I.I.S. (kg cm/cm²) | 13.0 | 10.8 | -- | 4 | 3 | 14 | 21 |
| W. A. (%) | 1.0 | 1.0 | <0.01 | <0.01 | <0.03 | <0.03 | 0.3 |
| M. S. (%) | (0.2) | (0.3) | (1.5) | (2) | (1.4) | (1.6) | (0.4) |
| E1: first embodiment E2: second embodiment LDPE: low density polyethylene HDPE: high density polyethylene PPHP: polypropylene homopolymer PPBP: polypropylene block polymer ABS: acrylonitrile butadiene styrene resin S. G.: specific gravity Y. S.: yield strength F. S.: fracture strength F. E.: fracture elongation B. S.: bending or flexural strength M.F.E.: modulus of flexural elasticity I.I.S.: Izod impact strength (without notch) W. A.: water absorption M. S.: mold shrinkage | | | | | | | |

Its modulus of flexural or bending elasticity is strongly 10,200 kg/cm²; whereas, the modulus of flexural elasticity of LDPE (low density polyethylene used as a binder) is 3,000 kg/cm². Its mold shrinkage is 0.2 %, which is a 7.5th of 1.5 % of LDPE. The waste paper absorbes water and is decomposed; whereas, the water absorption of the paper pellets in the invention is only 1.0 % per 24 hours and the paper pellets have the watertight qualities. We made injection molding experiments with a mold for the throwaway camera frame by using the paper pellets of the embodiment and the thickness up to 0.6 mm could be achieved as a thinnest one. In addition, the thin sheets of 1 mm thickness and 100 mm width could be formed by extrusion and the perfect water resistant corrugated fibreboard could be manufactured with this sheet material.

In the second embodiment, the main ingredient is the pulverized waste paper, the binder is polypropylene, the crosslinking agent is maleic anhydride polypropylene (M.P.P.) and the lubricant is stearin. The ratios of the composition are as follows:

| | | |
|---|---|---|
| 3 mm mesh pass pulverized waste paper (main ingredient) | 60.0% | 240kg |
| 5 mm mesh pass pulverized polypropylene (binder) | 36.5% | 146kg |
| maleic anhydride polypropylene (crosslinking agent) | 3.0% | 12kg |
| stearin (lubricant) | 0.5% | 2kg |
| Total | 100.0% | 400kg |

The waste corrugated board paper is employed as a main ingredient, which is pulverized to 3 mm mesh pass. The polypropylene scrap bands are pulverized to 5 mm mesh pass and are used as a binder. The maleic anhydride polypropylene (M.P.P.) as a crosslinking agent and stearin as a lubricant are utilized. In a similar manner to the first embodiment, the dried pulverized paper 240 kg and maleic anhydride polypropylene (M.P.P.) 12 kg are put into the 500 liter compression heating mixer and are heated to 180 Celcius degrees while kneading the mixture. In 10 minutes, the M.P.P. is completely fused, the pulverized paper is impregnation coated and the surface treatment of the pulverized paper is completed. The M.P.P. impregnates into the paper tissue, and therefore the paper and M.P.P. are combined together physically strongly.

The pulverized paper 252 kg which is surface treated with the M.P.P., polypropylene (PP) 146 kg which is pulverized to 5 mm mesh pass, and stearin 2 kg are put into the 500 liter mixing kneader and are heated to 190-200 Celcius degrees by introducing the steam into the jacket of the mixing kneader while kneading them for 10 minutes. Then, the material is all mixed and fused together to form a paste material. The paste material is forcefully put into the hopper of the twin screw extuder. The parison having a diameter of 3 mm is extruded from the end of the extruder, is hot cut into the pieces of 3 mm long by a hot cut machine and is transferred while being air cooled to form the paper pellets of the second embodiment, in which the binder is polypropylene. The paper pellets could be manufactured in the similar way of the first embodiment even if the binder is polypropylene and the crosslinking agent is maleic anhydride polypropylene (M.P.P.). The mechanical or physical properties of the paper pellets in the first and second embodiments and the synthetic resins are shown in Table 1, which reveals the superior mechanical strength of the exemplified paper pellets in the invention.

## Claims

1. Paper pellets, characterized in that
dried, pulverized paper is mixed with a crosslinking agent under heating so that the pulverized paper is surface treated by means of an impregnation coating with the crosslinking agent;
the surface treated pulverized paper, a thermoplastic synthetic resin and a lubricant are kneaded together under heating and compression to produce a paste material; and
the paste material is granulated and cooled.

2. A method for manufacturing paper pellets, comprising the steps of
surface-treating dried, pulverized paper by means of an impregnation coating with a crosslinking agent wherein the dried, pulverized paper is mixed with the crosslinking agent while heating a mixture thereof so that the crosslinking agent is melted and coated on surfaces of the pulverized paper;
producing a paste material by kneading the surface-treated, pulverized paper with a thermoplastic synthetic resin and a lubricant under heating and compression; and
extruding the paste material with an extruder, cutting a parison having a small diameter extruded from the extruder into pieces and air-cooling the pieces.

3. A method for manufacturing paper pellets as defined in claim 2, wherein said dried, pulverized paper is less than a 1 mm mesh pass.

4. A method for manufacturing paper pellets as defined in claim 2, wherein said pellets contain the pulverized paper greater than 50% by weight.

5. A method for manufacturing paper pellets as defined in claim 2, wherein said thermoplastic synthetic resin is polyolefine.

6. A method for manufacturing paper pellets as defined in claim 2, wherein said thermoplastic synthetic resin is polyethylene and said crosslinking agent is atactic polypropylene.

7. A method for manufacturing paper pellets as defined in claim 2, wherein said thermoplastic synthetic resin is polypropylene and said crosslinking agent is maleic anhydride polypropylene.
